# EUROPÄISCHE PATENTSCHRIFT

(11) **EP 3 417 395 B1**
(45) Veröffentlichungstag und Bekanntmachung des Hinweises auf die Patenterteilung: **29.03.2023**
(21) Anmeldenummer: 17706184.3
(22) Anmeldetag: 15.02.2017
(51) Int. Cl.: H04L 9/40, G06F 21/44, H04L 9/32, H04W 12/069

(54) **NACHWEISEN EINER AUTHENTIZITÄT EINES GERÄTES MITHILFE EINES BERECHTIGUNGSNACHWEISES**
PROVING AUTHENTICITY OF A DEVICE WITH THE AID OF PROOF OF AUTHORIZATION
DÉTERMINATION DE L'AUTHENTICITÉ D'UN APPAREIL À L'AIDE D'UN CERTIFICAT D'AUTORISATION

(30) Priorität: 30.03.2016 DE 102016205198
(43) Veröffentlichungstag der Anmeldung: 26.12.2018
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(74) Vertreter: Siemens Patent Attorneys
(86) Internationale Anmeldenummer: PCT/EP2017/053376
(87) Internationale Veröffentlichungsnummer: WO 2017/167498

(56) Entgegenhaltungen:
- US-A1- 2008 082 449
- US-A1- 2009 083 833
- US-B1- 8 667 265

## Beschreibung

In industriellen Automatisierungsanlagen werden im Rahmen von Sicherheitsinfrastrukturen Berechtigungsnachweise oder Security Credentials, wie beispielsweise digitale Zertifikate eingesetzt, welche durch Zertifizierungsinstanzen oder sogenannte Certification Authorities ausgestellt werden. Dabei wird von einem Gerät innerhalb der Automatisierungsanlage ein digitales Zertifikat benutzt, um sich gegenüber einem Dritten auszuweisen. Das Zertifikat bestätigt mithilfe einer Signatur der Zertifizierungsinstanz, dass die im Zertifikat enthaltenen Angaben über beispielsweise die Identität oder einen öffentlichen Schlüssel des Gerätes korrekt sind.

Technische Geräte können zur eindeutigen Kennzeichnung der Hardware über ein Typschild gekennzeichnet werden. Beispielsweise können Sicherheitsmerkmale wie ein Hologramm in das Typschild integriert werden. Weiterhin können Daten während der Produktion in das Gerät eingebracht werden, die auch während der Nutzung abgefragt werden können. Sofern eine Datenkommunikationsverbindung zwischen einem Gerät und einer Prüfstelle vorhanden ist, kann diese benutzt werden um eine kryptographische Authentisierung durchzuführen.

Es ist allgemein bekannt, dass digitale Zertifikate gespeichert werden, welche einen öffentlichen Schlüssel eines Gerätes und eine Identifizierungsinformation des Gerätes aufweisen. Es ist dabei auch bekannt, dass Herstellerzertifikate verwendet werden, um Betreiberzertifikate geschützt einzurichten. Dabei weisen gängige Authentisierungsmodule eine Identifizierungsinformation auf, die durch den Hersteller des Authentisierungsmoduls festgelegt ist.

Aus der Offenlegungsschrift DE 102013203101 A1 ist es bekannt geworden, eine Zertifikatsanfrage mit weiteren Parametern oder Attributen durch eine Zwischeninstanz ergänzen zu lassen und somit eine erweiterte Zertifikatsanfrage zu stellen.

Aus der US 2008/0082449 A1 ist ferner ein industrielles Automatisierungssystem bekannt, umfassend mindestens eine Lizenzkomponente, die von einem Dritten bereitgestellt wird, um den Zugriff auf einen Teil einer industriellen Steuerungskomponente zu ermöglichen. Des Weiteren ist mindestens eine Protokollkomponente vorgesehen, welche teilweise auf einem privaten Schlüsselaustausch basiert, und dabei die Authentifizierung und den Zugriff auf den Teil der industriellen Steuerungskomponente erleichtert.

Es besteht ein Bedarf, eine zuverlässige Authentisierung technischer Geräte gegenüber Prüfstellen zu ermöglichen unter Verwendung von Berechtigungsnachweisen oder Security Credentials, wie insbesondere digitalen Zertifikaten. Dabei soll sowohl die Integrität des vorgelegten Berechtigungsnachweises als auch die Authentizität der das Zertifikat vorlegenden Einheit gewährleistet werden.

Diese Aufgabe wird durch die in den unabhängigen Ansprüchen angegebenen Merkmale gelöst. Vorteilhafte Ausgestaltungen sind in den abhängigen Ansprüchen angegeben.

Die Erfindung betrifft ein Verfahren zum Nachweisen einer Authentizität eines Gerätes mithilfe eines Berechtigungsnachweises des Gerätes,
- wobei in einem ersten Schritt der Berechtigungsnachweis bereitgestellt wird und die Unversehrtheit von Identitätsangaben des Berechtigungsnachweises anhand einer digitalen Signatur eines Berechtigungsnachweisausstellers überprüfbar ist, wobei der Berechtigungsnachweis eine Hardware-Authentisierungsinformation aufweist, und
- wobei in einem zweiten Schritt eine Zugehörigkeit des Berechtigungsnachweises zu dem Gerät mittels eines zu der Hard-1 ware-Authentisierungsinformation gehörigen Hardware-Geheimnisses des Gerätes nachgewiesen wird,
wobei die Hardware-Authentisierungsinformation in ein Attributzertifikat eingebunden wird, welches auf einen weiteren Berechtigungsnachweis verweist, wobei die Identitätsangaben mittels des weiteren Berechtigungsnachweises überprüfbar sind.

Unter einem Gerät ist beispielsweise ein Feldgerät, insbesondere ein innerhalb einer Automatisierungsanlage vorgesehenes Feldgerät zu verstehen. Als Berechtigungsnachweis wird ein sogenanntes Security Credential verstanden, welches in einer Datenstruktur, beispielsweise in Form einer standardisierten Datenstruktur, beispielsweise als digitales Zertifikat ausgebildet, Daten zur Authentisierung aufweist.

Beispielsweise enthält ein Berechtigungsnachweis in Form eines digitalen Zertifikates einen eindeutigen Namen eines Berechtigungsnachweisausstellers oder eine Zertifizierungsinstanz, einen eindeutigen Namen oder Identifizierer oder Identifier des Gerätes, beispielsweise durch einen Hersteller vergeben, einen öffentlichen Schlüssel des Gerätes und weitere Angaben wie beispielsweise Zeitangaben und optionale Erweiterungen. Überdies weist ein digitales Zertifikat eine Signatur des Berechtigungsnachweisausstellers auf. Mithilfe eines kryptographischen Verfahrens und eines privaten Schlüssels des Berechtigungsnachweisausstellers wird die digitale Signatur über die im Zertifikat angegebenen Identitätsangaben und optionale Erweiterungen gebildet.

Unter dem Berechtigungsnachweisaussteller ist insbesondere die Zertifizierungsinstanz einer Sicherheitsinfrastruktur, beispielsweise einer PKI, kurz für public key infrastructure, zu verstehen. Die sogenannte Certificate Authority stellt dabei die vertrauenswürdige Instanz in einem System dar, deren öffentlicher Schlüssel bekannt ist und deren privater Schlüssel vor Ausspähen oder Manipulation streng zu schützen ist.

Im ersten Schritt wird somit eine Überprüfung des Berechtigungsnachweises mit Hilfe der digitalen Signatur und der Identitätsangaben durchgeführt. Im zweiten Schritt wird aus einem insbesondere bereits überprüften Berechtigungsnachweis die Hardware-Authentisierungsinformation entnommen und zusätzlich ein Hardware-Authentisierungsmechanismus angewendet. Die beiden Schritte können auch zeitlich in umgekehrter Reihenfolge durchgeführt werden.

Die Hardware-Authentisierungsinformation im Berechtigungsnachweis ist als zusätzliche Authentisierungsinformation vorgesehen, welche eine Zugehörigkeit des Berechtigungsnachweises zu dem den Berechtigungsnachweis vorlegenden Gerät nachweist. Dazu ist auf dem Gerät ein Hardware-Geheimnis vorgesehen, welches zu der Hardware-Authentisierungsinformation gehört und insbesondere nur dem Gerät bekannt ist oder durch das Gerät ermittelbar ist.

Somit wird eine Zwei-Faktor-Authentisierung ermöglicht, die eine Authentisierung des Gerätes insbesondere daran knüpft, dass ein hardwarespezifisches Geheimnis für die Überprüfung verwendet wird. Dies sollte nur durch das originale, unmanipulierte Gerät möglich sein. Somit wird ermöglicht, dass beispielsweise ein digitales Zertifikat eines Gerätes neben dem öffentlichen Geräteschlüssel, der gegebenenfalls direkt Bestandteil der Identitätsangaben ist, zusätzlich eine andere, zweite Authentisierungsinformation für eine verbesserte Hardware-Authentisierung aufweist.

Das Hardware-Geheimnis und/ oder die Hardware-Authentisierungsinformation weichen ab von den Identitätsangaben oder von Schlüsselmaterial, auf das die Identitätsangaben verweisen, so dass durch die zusätzliche Authentisierung im zweiten Schritt eine erhöhte Sicherheit erreicht wird. Insbesondere verweist die Hardware-Authentisierungsinformation als zweite Authentisierungsinformation neben im Berechtigungsnachweis oder Zertifikat enthaltenen Informationen nicht auf einen öffentlichen Schlüssel, der schon für die Zertifikatsüberprüfung verwendet wird, sondern verweist auf ein von den Identitätsangaben abweichendes Hardware-Geheimnis.

Beispielsweise wird durch den Berechtigungsnachweis ein Herstellerzertifikat gebildet, welches individuell in einer Fertigungsphase im Gerät hinterlegt wird. Das Herstellerzertifikat und ein dazugehöriger privater Schlüssel, welcher das Hardware-Geheimnis darstellt, sind beispielsweise in einem Hardware-Security-Modul des Gerätes oder in der Firmware gespeichert.

Zum Nachweisen der Authentizität kann das Gerät also zwei Authentisierungsschritte anstoßen oder durchführen. Es findet einerseits das übliche Vorlegen eines Berechtigungsnachweises statt, wobei mittels der im Berechtigungsnachweis enthaltenen Signatur der Zertifizierungsstelle und des öffentlichen Schlüssels der Zertifizierungsstelle überprüft wird, ob die im Zertifikat enthaltenen Angaben zur Identität, insbesondere zu einer ID des Gerätes und zu einem öffentlichen Schlüssel des Gerätes, von der Zertifizierungsinstanz beglaubigt wurden. Zusätzlich findet eine zweite Authentisierung statt, bei welcher die Hardware-Authentisierungsinformation genutzt wird, um die Kenntnis oder den Besitz eines Hardware-Geheimnisses durch das Gerät nachzuprüfen oder nachweisen zu lassen. Es wird somit nicht nur die Integrität des vorgelegten digitalen Zertifikates, sondern zusätzlich die Bindung des digitalen Zertifikates an die das Zertifikat vorlegende Stelle, in diesem Fall das Gerät, erreicht.

Die erweiterte Authentisierung eines vom Hersteller festgelegten Hardware-Gerätezertifikates unterstützt auf vorteilhafte Weise eine manipulationsgeschützte Bindung zu einem konfigurierbaren Gerätezertifikat, welches beispielsweise vom Betreiber eingebracht wird. Schlüssellängen oder Krypto-Algorithmen für die Geräte-Authentisierung im Rahmen der üblichen zertifikatsbasierten Geräte-Authentisierung sind unabhängig von Schlüssellängen und der Ausgestaltung von Krypto-Algorithmen für die Hardware-Authentisierung des Gerätes auf Grundlage der im Berechtigungsnachweis enthaltenen Hardware-Authentisierungsinformation.

Gemäß einer Ausgestaltung ist die Hardware-Authentisierungsinformation als ein Identifizierer eines Hardware-Authentisierungsmoduls ausgebildet. Somit kann ein zu Zwecken der Zwei-Faktor- oder Second Factor-Geräte-Authentisierung speziell vorgesehenes Modul auf dem Gerät dazu benutzt werden, einer die Authentifizierung durchführenden Einheit die Hardware-Authentisierungsinformation bereitzustellen.

Gemäß einer Ausführungsform ist der Identifizierer als ein Identifizierer oder eine Seriennummer eines Hardware-Authentisierungsschaltkreises oder als ein Wert oder Hashwert eines öffentlichen Schlüssels des Hardware-Authentisierungsmoduls oder als ein Wert oder Hashwert eines Zertifikates eines Hardware-Authentisierungsmoduls oder als ein Identifizierer eines in einer Fertigungsphase auf das Gerät aufgebrachten symmetrischen Schlüssels oder als ein Index einer in einer Fertigungsphase auf das Gerät aufgebrachten symmetrischen Schlüsseltabelle oder einer auf dem Gerät vorgesehenen physikalisch unklonbaren Funktion oder als ein Identifizierer für eine Schlüsseltabelle ausgebildet.

Es wird somit mithilfe des Identifizierers eine Beschreibung eines Geräte-Authentisierungsfaktors im Berechtigungsnachweis oder im digitalen Zertifikat vorgelegt. Der Identifzierer wirkt somit als ein Hinweis oder Pointer oder Index auf ein Authentisierungsmerkmal des Gerätes.

Gemäß einer Ausgestaltung beruht das Nachweisen der Zugehörigkeit mittels des zu der Hardware-Authentisierungsinformation gehörigen Hardware-Geheimnisses auf einem symmetrischen oder asymmetrischen Authentisierungsverfahren. Je nachdem, ob die Hardware-Authentisierungsinformation auf ein symmetrisches oder asymmetrisches Schlüsselpaar hinweist, erfolgt eine symmetrische oder asymmetrische Authentisierung. Beispielsweise wirkt ein Identifizierer eines in der Fertigung auf das Gerät aufgebrachten symmetrischen Schlüssels derart, dass ein Challenge-Response-Verfahren durch die authentifizierende Einheit ausgelöst wird, bei welchem eine korrekte, von der Prüfstelle erwartete Response, nur mittels des symmetrischen Schlüssels durch das Gerät berechnet werden kann. Der Identifizierer kann ferner auf eine Schlüsseltabelle verweisen, aus welcher dann über eine Indexangabe in der Hardware-Authentisierungsinformation Challenge-Response-Anfragen generiert werden können. Unter Nutzung des jeweiligen Schlüssels kann wiederum das Gerät die passende Antwort generieren. Nur bei passender Antwort ist die zweite Authentisierung dann ebenfalls erfolgreich. In einer Variante wird die Schlüsseltabelle beispielsweise durch einen Betreiber im Gerät aktualisiert.

Gemäß einer Ausgestaltung ersetzt eine physikalisch unklonbare Funktion die Wirkung des symmetrischen Schlüssels. Im Zertifikat kann dann ein Index einer Tabelle von Challenge-Response-Werten der physikalisch unklonbaren Funktion PUF eingetragen sein.

Ist eine Hardware-Authentisierungsinformation vorgesehen, welche auf einen öffentlichen Schlüssel des Gerätes bzw. eines Hardware-Authentisierungsmoduls des Gerätes verweist, entweder direkt oder wiederum mittels eines Zertifikates, so wird das Hardware-Authentisierungsverfahren - ebenso wie schon das Verfahren zur Überprüfung der Identitätsangaben - ebenfalls asymmetrisch durchgeführt. Beispielsweise wird das TLS-Protokoll, kurz für Transport Layer Security-Protocol, genutzt. Eine zu einer Challenge erwartete Response wird dann mittels eines privaten oder geheimen Schlüssels des Gerätes oder des Authentisierungsmoduls generiert. Wiederum wird eine Bindung des Zertifikates an die das Zertifikat vorlegende Einheit mittels einer asymmetrischen Zwei-Faktor-Authentisierung ermöglicht.

Gemäß einer Ausgestaltung ist das Hardware-Geheimnis als privater oder geheimer Schlüssel oder als physikalisch unklonbare Funktion ausgebildet. Das Hardware-Geheimnis wird passend zum Authentisierungsverfahren gewählt.

Gemäß einer Ausgestaltung wird das Hardware-Geheimnis im Speicher des Gerätes gespeichert. Bei Verwendung einer physikalisch unklonbaren Funktion wirkt diese als Speicher.

Gemäß einer Ausgestaltung wird die Hardware-Authentisierungsinformation in ein Attribut-Zertifikat eingebunden, welches auf einen weiteren Berechtigungsnachweis verweist, wobei die Identitätsangaben mittels des weiteren Berechtigungsnachweises überprüfbar sind. Somit lässt sich eine Bindung des Zertifikates an die Hardware leicht aktualisieren, insbesondere in Fällen, in welchen Teile eines Gerätes ausgetauscht werden, welche für die Bindung entscheidend sind. In solchen Fällen muss vorteilhaft nur das Attribut-Zertifikat erneuert werden.

Gemäß einer Weiterbildung wird der Berechtigungsnachweis von dem Berechtigungsnachweisaussteller auf eine Berechtigungsnachweisanfrage hin erstellt und die Berechtigungsnachweisanfrage weist die Hardware-Authentisierungsinformation als eine Erweiterung auf. Um beispielsweise ein digitales Zertifikat von einer Zertifizierungsstelle zu erhalten, wird eine Zertifikatsanfrage gesendet, ein sogenannter Certificate Signing Request, kurz CSR. Dieser weist die Identitätsangaben auf, welche durch die Zertifizierungsinstanz zu bestätigen sind. Die Hardware-Authentisierungsinformation kann auf vorteilhafte Weise als eine Erweiterung in ein CSR eingebunden werden. Gemäß einer Weiterbildung wird die Hardware-Authentisierungsinformation durch das Gerät in die Berechtigungsnachweisanfrage eingebunden oder durch eine zwischen das Gerät und den Berechtigungsnachweisaussteller geschaltete Komponente, insbesondere eine Registrierungsstelle oder Registrierungs-Authority. Eine Registrierungs-Authority kann dabei zusätzliche Funktionen übernehmen wie insbesondere den Inhalt der Berechtigungsnachweisanfrage prüfen, bevor sie an die Zertifizierungsinstanz weitergeleitet wird. Insbesondere kann dazu die Registrierungs-Authority unter Verwendung der Hardware-Authentisierungsinformation eine Geräte-Authentisierung durchführen.

Die Erfindung betrifft ferner eine Vorrichtung zum Nachweisen einer Authentizität eines Gerätes mit Hilfe eines Berechtigungsnachweises des Gerätes, aufweisend Mittel
- zum Bereitstellen des Berechtigungsnachweises, wobei die Unversehrtheit von Identitätsangaben des Berechtigungsnachweises mittels eines öffentlichen Schlüssels eines Berechtigungsnachweisausstellers überprüfbar ist und der Berechtigungsnachweis eine Hardware-Authentisierungsinformation aufweist,
- zum Nachweisen einer Zugehörigkeit des Berechtigungsnachweises zu dem Gerät mittels eines zu der Hardware-Authentisierungsinformation gehörigen Hardware-Geheimnisses des Gerätes,
wobei die Hardware-Authentisierungsinformation in ein Attributzertifikat eingebunden wird, welches auf einen weiteren Berechtigungsnachweis verweist, wobei die Identitätsangaben mittels des weiteren Berechtigungsnachweises überprüfbar sind.

Zum Nachweisen der Zughörigkeit des Berechtigungsnachweises zu dem Gerät wird ein Hardware-Authentisierungsmechanismus angewendet, der abweicht von zur Überprüfung des Berechtigungsnachweises verwendbaren Mechanismen. Insbesondere weist das Gerät Mittel zur Durchführung eines Challenge-Response-Mechanismus auf.

Gemäß einer Ausgestaltung weist die Vorrichtung ferner einen Speicher zum Speichern des Hardware-Geheimnisses auf.

Gemäß einer Weiterbildung weist die Vorrichtung ferner eine Schnittstelle zu einem Berechtigungsnachweisaussteller auf, wobei dem Berechtigungsnachweisaussteller eine Berechtigungsnachweisanfrage bereitgestellt wird, aufweisend die Identitätsangaben des Gerätes sowie die Hardware-Authentisierungsinformation, und der Berechtigungsnachweisaussteller eine digitale Signatur über die Identitätsangaben des Geräts sowie die Hardware-Authentisierungsinformation bildet. Die Vorrichtung kann dabei das Gerät selbst sein, welches mit einer Zertifizierungsinstanz oder Certificate Authority über die Schnittstelle verbunden ist. Ebenso kann als Alternative die Vorrichtung aus einem Gerät, beispielsweise einem Feldgerät, und einer Registrierungs-Authority bestehen, wobei die Re-gistrierungs-Authority die Zertifikatsanfragenachricht vor Weiterleitung an die Certificate Authority verarbeitet.

Gemäß einer Weiterbildung ist eine Registrierungsstelle vorgesehen zum Einbinden der Hardware-Authentisierungsinformation in eine Berechtigungsnachweisanfrage. Hierbei wird die Berechtigungsnachweisanfrage durch das Gerät erzeugt und enthält die notwendigen Hinweise auf die zweite Authentisierungsmöglichkeit, beispielsweise einen Index auf einen lokal gespeicherten symmetrischen Schlüssel.

Gemäß einer Weiterbildung ist eine Registrierungsstelle vorgesehen zur Prüfung der Hardware-Authentisierungsinformation mithilfe des zugehörigen Hardware-Geheimnisses und zur Weiterleitung einer Berechtigungsnachweisanfrage bei erfolgreicher Prüfung an einen Berechtigungsnachweisaussteller.

Gemäß einer Ausgestaltung ist eine Registrierungsstelle vorgesehen zum Erstellen einer erweiterten Berechtigungsnachweisanfrage, wobei insbesondere die Hardware-Authentisierungsinformation aus einer Datenbank auslesbar ist. Dies ist insbesondere dann vorteilhaft, wenn das Gerät die Möglichkeit der Hardware-Authentisierung nicht in die Berechtigungsnachweisanfrage eingebunden hat. Es erfodert jedoch, dass die Registrierungsstelle die notwendigen Informationen zur Hardware-Authentisierungsinformation zum Beispiel in Form einer Datenbank verfügbar hat. Nach erfolgreicher Prüfung der Hardware-Authentisierungsinformation mithilfe des zugehörigen Hardware-Geheimnisses aus der Datenbank wird die Berechtigungsnachweisanfrage des Gerätes durch die Registrierungsstelle entsprechend ergänzt und an einen Berechtigungsnachweisaussteller weitergeleitet.

Die Mittel können in Software, Hardware oder in einer Kombination aus Soft- und Hardware realisiert und ausgeführt werden. So können die durch die Mittel realisierten Schritte als Programm-Code auf einem Speichermedium, insbesondere einer Festplatte, CR-ROM oder einem Speichermodul abgelegt sein, wobei die einzelnen Anweisungen des Programmcodes von mindestens einer Recheneinheit, umfassend einen Prozessor, ausgelesen und verarbeitet werden.

Die Erfindung wird nachfolgend anhand von Ausführungsbeispielen der Figuren näher erläutert. Es zeigen:
- Figur 1:: eine schematische Darstellung eines Systems zum Nachweisen einer Authentizität eines Gerätes gemäß einem Ausführungsbeispiel der Erfindung;
- Figur 2:: ein Ablaufdiagramm eines Verfahrens zum Nachweisen einer Authentizität eines Gerätes gemäß einem weiteren Ausführungsbeispiel der Erfindung.

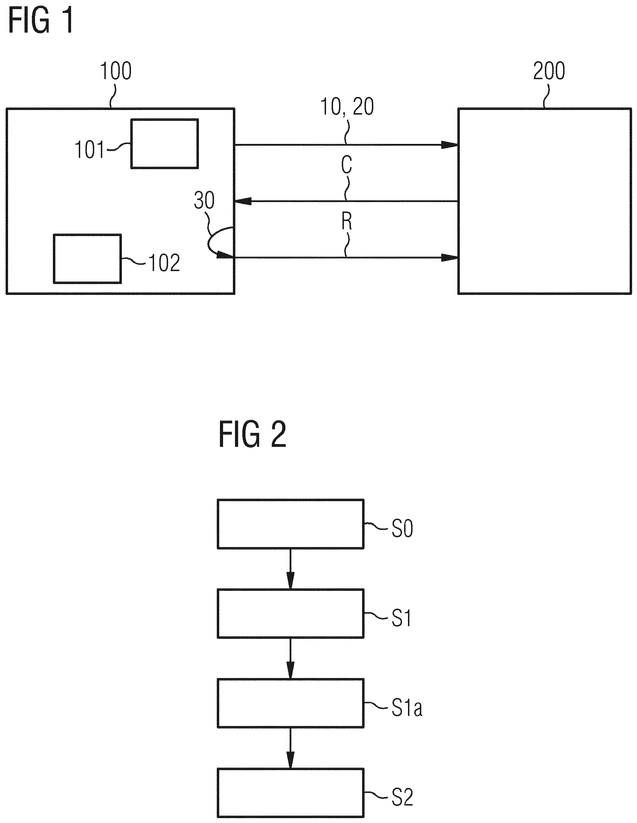

Figur 1 zeigt schematisch ein Gerät 100, welches eine Authentisierung gegenüber einer Prüfeinheit oder einem Authentisierungsserver 200 ausführt. Beispielsweise handelt es sich bei dem Gerät 100 um ein Automatisierungsgerät, welches innerhalb einer Industrie-Automatisierungsanlage seine Authentizität beispielsweise gegenüber dem Authentisierungsserver 200 manipulationsgeschützt nachweisen soll. Die Authentisierung soll dabei zeritfikatsgeschützt durchgeführt werden. Dafür kann auf eine bestehende Zertifizierungsinfrastruktur zurückgegriffen werden, welche das Gerät 100 mit von einer Zertifizierungsinstanz signierten Zertifikaten ausstattet. Öffentliche Schlüssel der Zertifizierungsinstanz sind insbesondere dem Authentisierungsserver 200 bekannt, sodass überprüft werden kann, ob die digitale Signatur der Zertifizierungsinstanz über im Zertifikat enthaltene Daten eine Integrität dieser Daten bestätigen kann. Dafür übermittelt das Gerät 100 ein Zertifikat als Berechtigungsnachweis 10 an den Authentisierungsserver 200. Das Zertifikat enthält beispielsweise den eindeutigen Namen der Zertifizierungsinstanz, einen eindeutigen Namen des Gerätes 100, einen öffentlichen Schlüssel des Gerätes 100, eine Zeitangabe, welche die Gültigkeit des Zertifikates festlegt sowie die digitale Signatur der Zertifizierungsinstanz über die genannten Daten.

Die Signatur wurde gebildet durch das Anwenden des privaten Schlüssels der Zertifizierungsinstanz auf den Hashwert der im Zertifikat übermittelten Angaben. Mittels des öffentlichen Schlüssels der Zertifizierungsinstanz ist im Rückwärtsschritt der Hashwert ermittelbar und mit dem Ergebnis einer Hashwertbildung über die im Zertifikat enthaltenen Angaben vergleichbar. Zusätzlich enthält das Zertifikat eine Hardware-Authentisierungsinformation 20.

Die Hardware-Authentisierungsinformation 20 weist auf ein Hardware-Geheimnis 30 hin, welches genutzt werden muss, um eine Zugehörigkeit des Zertifikates zum Gerät 100 nachzuweisen. Insbesondere wird ein Zertifikat oder ein öffentlicher Schlüssel eines Hardware-Authentisierungsmoduls oder darauf aus mittels Hashwertbildung abgeleitete Werte genutzt, um die Information zu übertragen, welcher private oder geheime Schlüssel in einer nachfolgenden Authentisierung zu verwendenden ist. Auch eine Seriennummer eines Hardware-Authentisierungsschaltkreises oder ein mittels eines Indexes auf den Eintrag einer Schlüsseltabelle verweisender Pointer kann vorteilhaft verwendet werden, um dem Authentisierungsserver 200 die benötigten Informationen für eine zusätzliche Hardware-Authentisierung zu übermitteln. Der Authentisierungsserver 200 leitet auf Grundlage der empfangenen Hardware-Authentisierungsinformation 20 eine Challenge C oder Anforderungsnachricht ab, welche an das Gerät 100 übermittelt wird. Insbesondere ist für das sich authentisierende Gerät 100 bei der Nutzung einer PUF eine Anzahl an Challenge-Response-Paaren auf dem Authentisierungsserver hinterlegt. Die Challenge C eines dieser Challenge-Response-Paare wird anhand des Index gewählt. Abhängig vom gewählten Hardware-Authentisierungsverfahren, kann der Authentisierungsserver die Response auch selbstständig berechnen und basierend darauf einen Vergleich mit der empfangenen Response durchführen.

Unter Verwendung des Hardware-Geheimnisses 30, welches in einem nichtflüchtigen Speicher 102 des Gerätes 100 gespeichert ist, erstellt das Gerät 100 mithilfe eines kryptographischen Verfahrens eine Response R. Das Hardware-Geheimnis 30 wird dabei als symmetrischer geheimer oder asymmetrischer privater geheimer Schlüssel eingesetzt. Passt die vom Gerät 100 zurückgesandte Response R zu dem Challenge-Response-Paar der gewählten Challenge C, so kann der Authentisierungsserver 200 neben der Integrität der im Zertifikat vorgelegten Daten über die Identität und den öffentlichen Schlüssel des Gerätes 100 ferner die Authentizität des Absenders des Zertifikates, d.h. die Bindung zwischen Zertifikat und Hardware des Gerätes 100, bestätigen.

In Figur 2 ist schematisch dargestellt, wie ein Ablaufdiagramm eines Authentisierungsvorgangs gemäß einem weiteren Ausführungsbeispiel der Erfindung abläuft. In einem initialen Schritt S0 startet dabei beispielsweise ein Authentisierungsserver den Authentisierungsvorgang mittels eines TLS-Protokolls. Ein Gerät legt dann im Rahmen des TLS-Protokolls in Schritt S1 sein Zertifikat vor, welches neben den üblichen Identitätsangaben auch eine zusätzliche Hardware-Authentisierungsinformation beinhaltet. Anschließend überprüft in Schritt S1a der Authentisierungsserver das Zertifikat unter Verwendung des öffentlichen Schlüssels einer vertrauenswürdigen Zertifizierungsinstanz, welche das Zertifikat für das Gerät ausgestellt hat.

Auf Grundlage des Zertifikates und insbesondere unter Verwendung der Hardware-Authentisierungsinformation wird nun auf Seiten des Authentisierungsservers eine Challenge generiert, welche an das Gerät übermittelt wird. Beispielsweise kommt zur Durchführung des Challenge-Response-Verfahrens zwischen Authentisierungsserver und Gerät ein http-Digest-Protokoll zur Anwendung, das auf der schon etablierten TLS Verbindung aufsetzen kann. Dabei wird beispielsweise durch den Authentisierungsserver ein Fingerprint eines Passwortes angefordert. Der Hinweis auf das entsprechende Passwort wird durch die Hardware-Authentisierungsinformation im Zertifikat geliefert und liegt somit auf beiden Seiten vor. Liegt auf Seiten des Gerätes auch das Passwort selbst vor, so kann im Schritt S2 eine Response generiert und an den Authentisierungsserver geliefert werden, welche von diesem aufgrund der empfangenen Hardware-Authentisierungsinformation erwartet wird. Entsprechend wird bei korrekter vorgelegter Response das Gerät als authentisch eingestuft.

Es ist ferner ebenso denkbar, dass die Response ohne vorherige Anfrage durch den Authentisierungsserver automatisch geschickt wird. Beispielsweise kann die Challenge mitgeliefert werden, sodass der Authentisierungsserver das Zusammenpassen von Challenge und Response und überdies das Zusammenpassen von Challenge und Hardware-Authentisierungsinformation überprüfen kann.

Nachfolgend ist zur Veranschaulichung ein Identitätszertifikat nach X509 dargestellt.

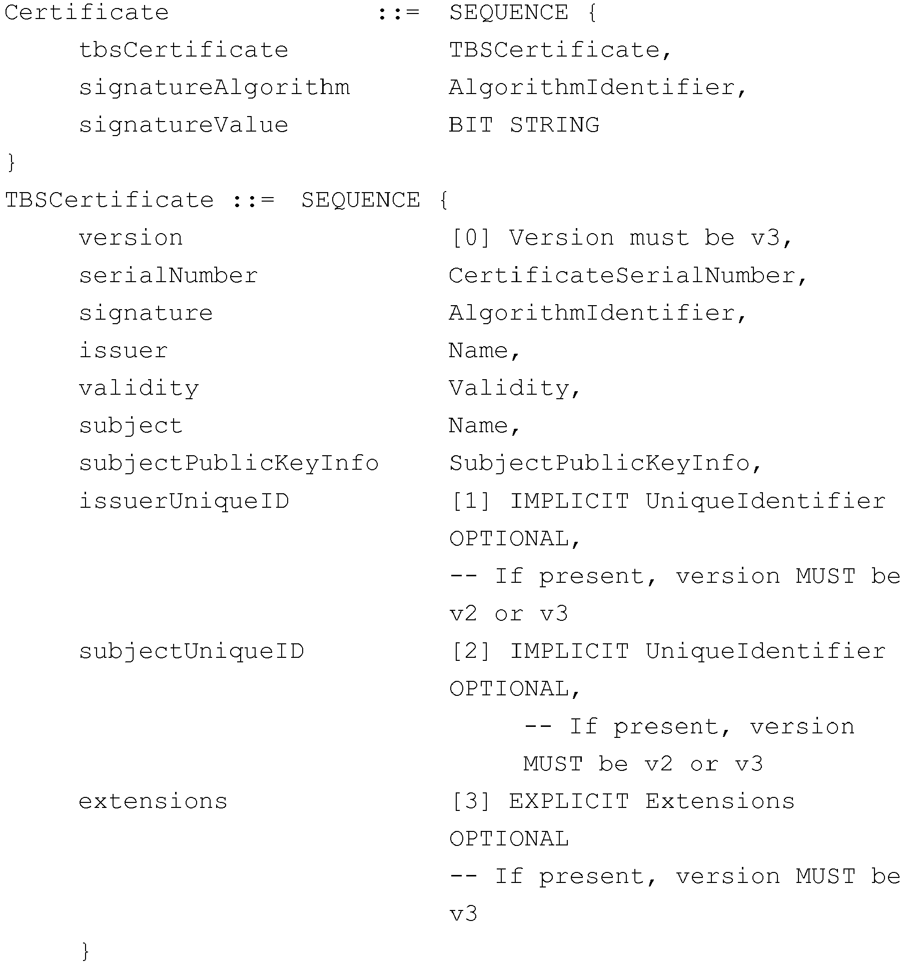

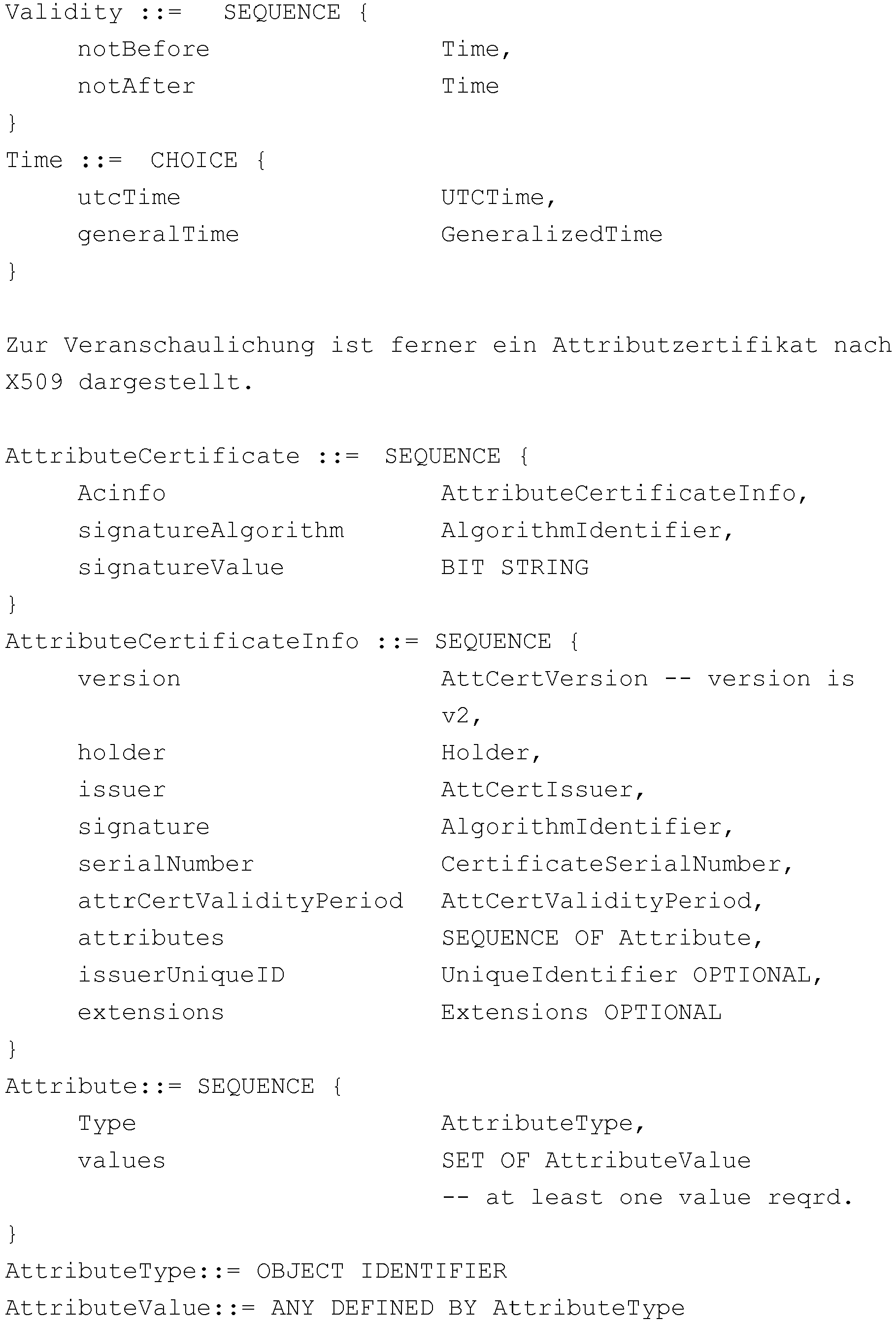

Zur Beschreibung eines Authentisierungsmoduls eines Gerätes kann eine Hardware-Authentisierungsinformation als Erweiterung in einem der oben beschriebenen Zertifikate wie folgt aussehen:

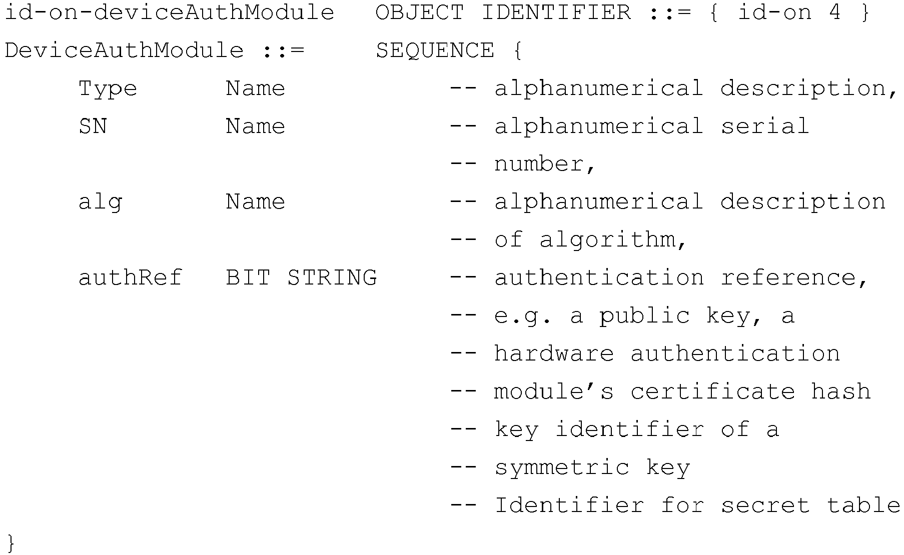

Die Erweiterung kann als kritisch oder critical im Zertifikat gesetzt werden, sodass die Zwei-Faktor-Authentisierung unter Verwendung der Hardware-Authentisierungsinformation notwendigerweise durchgeführt werden muss. Es kann ferner beispielsweise codiert werden, dass das Zertifikat nur dann als gültig akzeptiert werden soll, wenn die im Zertifikat angegebene Zwei-Faktor-Authentisierung erfolgreich durchgeführt wurde. Dies bedeutet, dass der öffentliche Schlüssel, der durch das Zertifikat bestätigt wird, nur dann als gültiger Schlüssel akzeptiert wird, wenn die Zwei-Faktor-Authentisierung ebenfalls erfolgreich durchgeführt wurde.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Nachweisen einer Authentizität eines Gerätes (100) mit Hilfe eines Berechtigungsnachweises (10) des Gerätes (100),
- wobei in einem ersten Schritt (S1) der Berechtigungsnachweis (10) bereitgestellt wird und die Unversehrtheit von Identitätsangaben des Berechtigungsnachweises (10) anhand einer digitalen Signatur eines Berechtigungsnachweisausstellers überprüfbar ist, wobei der Berechtigungsnachweis (10) eine Hardware-Authentisierungsinformation (20) aufweist, und
- wobei in einem zweiten Schritt (S2) eine Zugehörigkeit des Berechtigungsnachweises (10) zu dem Gerät (100) mittels eines zu der Hardware-Authentisierungsinformation (20) gehörigen Hardware-Geheimnisses (30) des Gerätes (100) nachgewiesen wird,
wobei die Hardware-Authentisierungsinformation abweicht von den Identitätsangaben oder von Schlüsselmaterial, auf das die Identitätsangaben verweisen und
wobei die Hardware-Authentisierungsinformation (20) in ein Attributzertifikat eingebunden wird, welches auf einen weiteren Berechtigungsnachweis verweist, wobei die Identitätsangaben mittels des weiteren Berechtigungsnachweises überprüfbar sind.

2. Verfahren nach Anspruch 1, wobei die Hardware-Authentisierungsinformation (20) als ein Identifizierer eines Hardware-Authentisierungsmoduls (101) ausgebildet ist.

3. Verfahren nach Anspruch 2, wobei der Identifizierer als ein Identifizierer oder eine Seriennummer eines Hardware-Authentisierungsschaltkreises oder als ein Wert oder Hashwert eines öffentlichen Schlüssels eines Hardware-Authentisierungsmoduls oder als ein Wert oder ein Hashwert eines Zertifikates des Hardware-Authentisierungsmoduls oder als ein Identifizierer eines in einer Fertigungsphase auf das Gerät aufgebrachten symmetrischen Schlüssels oder als ein Index einer in einer Fertigungsphase auf das Gerät aufgebrachten symmetrischen Schlüsseltabelle oder einer auf dem Gerät vorgesehenen physikalisch unklonbaren Funktion oder als ein Identifizierer für eine Schlüsseltabelle ausgebildet ist.

4. Verfahren nach einem der vorstehenden Ansprüche, wobei ein Nachweisen der Zugehörigkeit mittels des zu der Hardware-Authentisierungsinformation (20) gehörigen Hardware-Geheimnisses (30) auf einem symmetrischen oder asymmetrischen Authentisierungsverfahren, insbesondere einem Challenge-Response-basierten Authentisierungsverfahren, beruht.

5. Verfahren nach einem der vorstehenden Ansprüche, wobei das Hardware-Geheimnis (30) als privater oder geheimer Schlüssel oder physikalisch unklonbare Funktion ausgebildet ist.

6. Verfahren nach einem der vorstehenden Ansprüche, wobei das Hardware-Geheimnis (30) in einem Speicher (102) des Gerätes (100) gespeichert wird.

7. Verfahren nach einem der vorstehenden Ansprüche, wobei der Berechtigungsnachweis von dem Berechtigungsnachweisaussteller auf eine Berechtigungsnachweisanfrage hin erstellt wird und die Berechtigungsnachweisanfrage die Hardware-Authentisierungsinformation als eine Erweiterung aufweist.

8. Verfahren nach Anspruch 7, wobei die Hardware-Authentisierungsinformation durch das Gerät in die Berechtigungsnachweisanfrage eingebunden wird oder durch eine zwischen das Gerät und den Berechtigungsnachweisaussteller geschaltete Komponente, insbesondere eine Registrierungsstelle.

9. Vorrichtung zum Nachweisen einer Authentizität eines Gerätes (100) mit Hilfe eines Berechtigungsnachweises (10) des Gerätes (100),
aufweisend Mittel
- zum Bereitstellen des Berechtigungsnachweises (10), wobei die Unversehrtheit von Identitätsangaben des Berechtigungsnachweises (10) mittels eines öffentlichen Schlüssels eines Berechtigungsnachweisausstellers überprüfbar ist und der Berechtigungsnachweis (10) eine Hardware-Authentisierungsinformation (20) aufweist,
- zum Nachweisen einer Zugehörigkeit des Berechtigungsnachweises (10) zu dem Gerät (100) mittels eines zu der Hardware-Authentisierungsinformation (20) gehörigen Hardware-Geheimnisses (30) des Gerätes,
wobei die Hardware-Authentisierungsinformation abweicht von den Identitätsangaben oder von Schlüsselmaterial, auf das die Identitätsangaben verweisen und
wobei die Hardware-Authentisierungsinformation (20) in ein Attributzertifikat eingebunden wird, welches auf einen weiteren Berechtigungsnachweis verweist, wobei die Identitätsangaben mittels des weiteren Berechtigungsnachweises überprüfbar sind.

10. Vorrichtung nach Anspruch 9, ferner aufweisend einen Speicher (102) zum Speichern des Hardware-Geheimnisses (30).

11. Vorrichtung nach Anspruch 9 oder 10, ferner aufweisend eine Schnittstelle zu einem Berechtigungsnachweisaussteller, wobei dem Berechtigungsnachweisaussteller eine Berechtigungsnachweisanfrage bereitgestellt wird, aufweisend die Identitätsangaben des Gerätes sowie die Hardware-Authentisierungsinformation, und der Berechtigungsnachweisaussteller eine digitale Signatur über die Identitätsangaben des Gerätes sowie die Hardware-Authentisierungsinformation bildet.

12. Vorrichtung nach einem der Ansprüche 9 bis 11, wobei eine Registrierungsstelle vorgesehen ist zum Einbinden der Hardware-Authentisierungsinformation in eine Berechtigungsnachweisanfrage.

13. Vorrichtung nach einem der Ansprüche 9 bis 11, wobei eine Registrierungsstelle vorgesehen ist zur Prüfung der Hardware-Authentisierungsinformation mit Hilfe des zugehörigen Hardware-Geheimnisses und zur Weiterleitung einer Berechtigungsnachweisanfrage bei erfolgreicher Prüfung an einen Berechtigungsnachweisaussteller.

14. Vorrichtung nach einem der Ansprüche 9 bis 11, wobei eine Registrierungsstelle vorgesehen ist zum Erstellen einer erweiterten Berechtigungsnachweisanfrage, wobei insbesondere die Hardware-Authentisierungsinformation aus einer Datenbank auslesbar ist.

## Claims

1. Method for proving an authenticity of a device (100) with the aid of a proof of authorization (10) of the device (100),
- wherein a first step (S1) involves the proof of authorization (10) being provided and the integrity of identity details of the proof of authorization (10) being checkable on the basis of a digital signature of a proof of authorization issuer, the proof of authorization (10) comprising a piece of hardware authentication information (20), and
- wherein a second step (S2) involves an association of the proof of authorization (10) with the device (100) being proved by means of a hardware secret (30) of the device (100) that is associated with the hardware authentication information (20),
wherein the hardware authentication information differs from the identity details or from key material to which the identity details refer and
wherein the hardware authentication information (20) is incorporated into an attribute certificate referring to a further proof of authorization, the identity details being checkable by means of the further proof of authorization.

2. Method according to Claim 1, wherein the hardware authentication information (20) is in the form of an identifier of a hardware authentication module (101).

3. Method according to Claim 2, wherein the identifier is in the form of an identifier or a serial number of a hardware authentication circuit or in the form of a value or hash value of a public key of a hardware authentication module or in the form of a value or a hash value of a certificate of the hardware authentication module or in the form of an identifier of a symmetric key put onto the device in a production phase or in the form of an index of a symmetric key table put onto the device in a production phase or of a physical unclonable function provided on the device or in the form of an identifier for a key table.

4. Method according to one of the preceding claims, wherein proving the association by means of the hardware secret (30) associated with the hardware authentication information (20) involves a symmetric or asymmetric authentication method, in particular a challenge-response based authentication method.

5. Method according to one of the preceding claims, wherein the hardware secret (30) is in the form of a private or secret key or physical unclonable function.

6. Method according to one of the preceding claims, wherein the hardware secret (30) is stored in a memory (102) of the device (100).

7. Method according to one of the preceding claims, wherein the proof of authorization is produced by the proof of authorization issuer in response to a proof of authorization request, and the proof of authorization request comprises the hardware authentication information as an extension.

8. Method according to Claim 7, wherein the hardware authentication information is incorporated into the proof of authorization request by the device or by a component connected between the device and the proof of authorization issuer, in particular a registration authority.

9. Apparatus for proving an authenticity of a device (100) with the aid of a proof of authorization (10) of the device (100),
comprising means
- for providing the proof of authorization (10), the integrity of identity details of the proof of authorization (10) being checkable by means of a public key of a proof of authorization issuer, and the proof of authorization (10) comprising a piece of hardware authentication information (20),
- for proving an association of the proof of authorization (10) with the device (100) by means of a hardware secret (30) of the device that is associated with the hardware authentication information (20),
wherein the hardware authentication information differs from the identity details or from key material to which the identity details refer and
wherein the hardware authentication information (20) is incorporated into an attribute certificate referring to a further proof of authorization, the identity details being checkable by means of the further proof of authorization.

10. Apparatus according to Claim 9, further comprising a memory (102) for storing the hardware secret (30).

11. Apparatus according to Claim 9 or 10, further comprising an interface to a proof of authorization issuer, the proof of authorization issuer being provided with a proof of authorization request, comprising the identity details of the device and also the hardware authentication information, and the proof of authorization issuer forming a digital signature for the identity details of the device and the hardware authentication information.

12. Apparatus according to one of Claims 9 to 11, wherein there is provision for a registration authority for incorporating the hardware authentication information into a proof of authorization request.

13. Apparatus according to one of Claims 9 to 11, wherein there is provision for a registration authority for inspecting the hardware authentication information with the aid of the associated hardware secret and for forwarding a proof of authorization request to a proof of authorization issuer in the event of successful inspection.

14. Apparatus according to one of Claims 9 to 11, wherein there is provision for a registration authority for producing an extended proof of authorization request, in particular the hardware authentication information being readable from a database.

## Revendications

1. Procédé permettant de certifier l'authenticité d'un appareil (100) au moyen d'un certificat d'autorisation (10) de l'appareil (100),
- dans lequel, dans une première étape (S1), le certificat d'autorisation (10) est fourni et l'intégrité des données d'identité du certificat d'autorisation (10) peut être vérifiée au moyen d'une signature numérique d'un fournisseur de certificat d'autorisation, dans lequel le certificat d'autorisation (10) présente des informations d'authentification de matériel (20) ; et
- dans lequel, dans une seconde étape (S2), une appartenance du certificat d'autorisation (10) à l'appareil (100) est certifiée au moyen d'un secret de matériel (30) de l'appareil (100) appartenant aux informations d'authentification de matériel (20) ;
dans lequel les informations d'authentification de matériel diffèrent des données d'identité ou du matériel clé auquel les données d'identité renvoient ; et
dans lequel les informations d'authentification de matériel (20) sont intégrées dans un certificat d'attribut qui renvoie à un certificat d'autorisation supplémentaire, dans lequel les données d'identité peuvent être vérifiées au moyen du certificat d'autorisation supplémentaire.

2. Procédé selon la revendication 1, dans lequel les informations d'authentification de matériel (20) sont conçues sous la forme d'un identifiant d'un module d'authentification de matériel (101).

3. Procédé selon la revendication 2, dans lequel l'identifiant est conçu sous la forme d'un identifiant ou d'un numéro de série d'un circuit d'authentification de matériel ou sous la forme d'une valeur ou d'une valeur de hachage d'une clé publique d'un module d'authentification de matériel ou sous la forme d'une valeur ou d'une valeur de hachage d'un certificat du module d'authentification de matériel ou sous la forme d'un identifiant d'une clé symétrique appliquée à l'appareil dans une phase de fabrication ou sous la forme d'un index d'une table de clés symétriques appliquée à l'appareil dans une phase de fabrication ou d'une fonction physiquement non clonable prévue sur l'appareil ou sous la forme d'un identifiant pour une table de clés.

4. Procédé selon l'une quelconque des revendications précédentes, dans lequel une certification de l'appartenance au moyen du secret de matériel (30) appartenant aux informations d'authentification de matériel (20) est basée sur un procédé d'authentification symétrique ou asymétrique, en particulier un procédé d'authentification basé sur une réponse de défi.

5. Procédé selon l'une quelconque des revendications précédentes, dans lequel le secret de matériel (30) est une clé privée ou secrète ou une fonction physiquement non clonable.

6. Procédé selon l'une quelconque des revendications précédentes, dans lequel le secret de matériel (30) est stocké dans une mémoire (102) de l'appareil (100).

7. Procédé selon l'une quelconque des revendications précédentes, dans lequel le certificat d'autorisation est créé par le fournisseur de certificat d'autorisation en réponse à une demande de certificat d'autorisation, et la demande de certificat d'autorisation présente l'information d'authentification de matériel en tant qu'extension.

8. Procédé selon la revendication 7, dans lequel les informations d'authentification de matériel sont intégrées par l'appareil dans la demande de certificat d'autorisation ou par un composant connecté entre l'appareil et le fournisseur de certificat d'autorisation, en particulier un registre.

9. Dispositif permettant de certifier l'authenticité d'un appareil (100) au moyen d'un certificat d'autorisation (10) de l'appareil (100), comprenant des moyens :
- permettant de fournir le certificat d'autorisation (10), dans lequel l'intégrité des données d'identité du certificat d'autorisation (10) peut être vérifiée au moyen d'une clé publique d'un fournisseur de certificat d'autorisation et le certificat d'autorisation (10) présente des informations d'authentification de matériel (20) ;
- permettant de certifier l'appartenance du certificat d'autorisation (10) à l'appareil (100) au moyen d'un secret de matériel (30) de l'appareil appartenant aux informations d'authentification de matériel (20) ;
dans lequel les informations d'authentification de matériel diffèrent des données d'identité ou du matériel clé auquel les données d'identité renvoient ; et
dans lequel les informations d'authentification de matériel (20) sont intégrées dans un certificat d'attribut qui renvoie à un certificat d'autorisation supplémentaire, dans lequel les données d'identité peuvent être vérifiées au moyen du certificat d'autorisation supplémentaire.

10. Dispositif selon la revendication 9, présentant en outre une mémoire (102) permettant de stocker le code secret matériel (30).

11. Dispositif selon la revendication 9 ou 10, présentant en outre une interface avec un fournisseur de certificat d'autorisation, dans lequel une demande de certificat d'autorisation est fournie au fournisseur de certificat d'autorisation, présentant les données d'identité de l'appareil et les informations d'authentification de matériel, et le fournisseur de certificat d'autorisation forme une signature numérique sur les données d'identité de l'appareil ainsi que sur les informations d'authentification de matériel.

12. Appareil selon l'une quelconque des revendications 9 à 11, dans lequel un registre est prévu afin d'intégrer les informations d'authentification de matériel dans une demande de certificat d'autorisation.

13. Dispositif selon l'une quelconque des revendications 9 à 11, dans lequel un registre est prévu afin de vérifier les informations d'authentification de matériel à l'aide du secret de matériel associé et afin de transmettre une demande de certificat d'autorisation à un fournisseur de certificat d'autorisation en cas de vérification réussie.

14. Dispositif selon l'une quelconque des revendications 9 à 11, dans lequel un registre est prévu afin d'établir une demande de certificat d'autorisation étendue, en particulier dans lequel les informations d'authentification de matériel peuvent être lues à partir d'une base de données.
